# EUROPEAN PATENT APPLICATION

(11) **EP 4 254 176 A1**
(43) Date of publication of application: **04.10.2023**
(21) Application number: 23163156.5
(22) Date of filing: 21.03.2023
(51) Int. Cl.: G06F 9/30

(54) **SYSTEM FOR MANAGING A GROUP OF ROTATING REGISTERS DEFINED ARBITRARILY IN A PROCESSOR REGISTER FILE**

(30) Priority: 31.03.2022 FR 2202950
(71) Applicant: Kalray, 38330 Montbonnot Saint Martin (FR)
(72) Inventor: DUPONT DE DINECHIN, Benoît, 38000 Grenoble (FR)
(74) Representative: de Jong, Jean Jacques

(57) **Abstract**

The invention relates to a processor core including an N-bit system memory interface; a register file comprising a plurality of general purpose registers ($r) of capacity less than N bits; a set of N-bit vector registers ($a); in its instruction set, a register manipulation instruction (VLOAD, VALIGN) executable with the following parameters: a) a value (BLTF) defining in the set of vector registers a buffer area formed by a plurality of consecutive vector registers, and b) a reference to a first general purpose register ($rV), the first general purpose register containing an index (idx) identifying a vector register ($a(B+idx)) within the buffer area; and an execution unit (10, 20) configured to, upon execution of a register manipulation instruction, read or write, in one cycle, N bits in a vector register identified from the value defining the buffer area and the index contained in the first general purpose register ($rV).

## Description

### Field

The invention relates to loading data blocks from a memory into registers of a processor, where the data blocks may begin at addresses that are not aligned with a data bus of the memory.

### Background

In some data processing applications, such as streaming, one or more streams of data may be stored in a memory and read back by a processor for further processing. In such an application, the memory read operations to retrieve the stream data do not use a cache, so each read operation has a latency of several cycles of a system clock. Read operations are often executed in a loop to create a processing pipeline in which read instructions can be chained without latency.

The core of such a loop is an instruction that loads a number of bits of the width of the data bus into processor registers explicitly designated by the load instruction. A first difficulty lies in the management of the destination registers, considering the memory latency. Indeed, the registers designated in an iteration of the loop do not receive their data until several cycles later, so that the next iteration cannot designate the same registers. A second difficulty is that the memory access bus operates at maximum performance only when the memory read addresses are aligned, i.e., are multiples of the data bus width. Indeed, the organization of the application software does not allow this alignment to be respected in most cases.

To overcome the first difficulty in a generic processor architecture, a modular variable expansion (MVE) technique is used. According to this technique, a macro-loop is designed in which several read iterations are unrolled to use different destination registers. The number of unrolled iterations is chosen to have an execution time greater than the maximum memory latency. This technique is difficult to apply when the memory latency is high, which is typically the case in streaming mode, because the number of available registers could become insufficient considering that other operations of the loop also consume registers.

Some processor architectures have a group of rotating registers that allow a loop to be unrolled transparently. Successive writes or reads to the same address in the rotating register group result in accesses to successive registers in the register group. When the last register is reached, the succession starts again from the first register. A loop can then be written in a traditional way with a single access operation that uses an address assigned to the rotating register group as its destination. Patent US7594102 refers to such a group of registers. The document by Hewlett-Packard "HPL-PD Architecture Specification", available at the link https://www.hpl.hp.com/techreports/93/HPL-93-80R1.pdf, describes a processor architecture including a group of rotating registers.

To overcome the second difficulty, related to the fact that the data to be processed are generally not aligned in memory, it has been proposed, for example in patent US7197625B1, to load the values of two successive memory reads into specialized registers, from which an instruction extracts the correctly aligned data for the processor.

### Summary

A processor core is generally provided, including an N-bit system memory interface; a register file comprising a plurality of general purpose registers of capacity less than N bits; a set of N-bit vector registers ; in its instruction set, a register manipulation instruction executable with the following parameters: a) a value defining in the set of vector registers a buffer area formed by a plurality of consecutive vector registers, and b) a reference to a first general purpose register, the first general purpose register containing an index identifying a vector register ) within the buffer area; and an execution unit configured to, upon execution of a register manipulation instruction, read or write, in one cycle, N bits in a vector register identified from the value defining the buffer area and the index contained in the first general purpose register .

The register manipulation instruction may be a vector load instruction executable with the following parameters: a) the value defining the buffer area, b) the reference to the first general purpose register containing the index, and c) a reference to a second general purpose register containing a source memory address ; and the execution unit be configured to, upon execution of a vector load instruction, transfer data from the memory at the address contained in the second general purpose register to the vector register identified by the index.

The register manipulation instruction may be an alignment instruction executable with the following parameters: a) the value defining the buffer area, the reference to the first general purpose register , the first general purpose register containing a value combining the index identifying the vector register within the buffer area and a right shift count, and d) a destination defining a vector register or a plurality of consecutive general purpose registers having together a capacity of N bits; and the execution unit be configured to, upon execution of an alignment instruction, simultaneously read two consecutive vector registers at the index, shift the concatenated contents of the two vector registers to the right by the right shift count, and write the N least significant bits of the shifted contents at the destination.

The value defining the buffer area may encode the rank of the initial vector register of the buffer area and the size of the buffer area, and the execution unit may be configured to produce the index modulo the size of the buffer area, whereby the buffer area is used in a rotating manner.

A method of aligning data read from a memory is also provided, comprising the following steps implemented at low level in a processor core: providing a rotating buffer area of a plurality of registers of the processor core; executing a series of load instructions to transfer blocks of data from the memory to first successive registers of the buffer, the number of instructions in the series being selected based on a memory read latency; and executing a loop including: i) a load instruction to transfer a memory block to a successive register of the buffer area, ii) an alignment instruction to simultaneously access two previously loaded successive registers of the buffer area and extract a data block overlapping the two successive registers, and iii) instructions processing the extracted data block.

The load instruction and the alignment instruction may each be executed with a first parameter defining the start and size of the buffer, and a second parameter referencing an index that identifies a position in the buffer, the method comprising steps of updating the indexes to designate successive registers in the buffer.

### Brief Description of the Drawings

Non-limiting embodiments are described hereinafter with reference to the attached drawings, among which:
Figure 1 shows a block diagram of elements of a central processing unit of a processor core, configured to execute a special instruction that handles writing in an arbitrary set of registers, such as a group of rotating registers;
Figure 2 depicts a block diagram of additional elements of the processing unit of Figure 1, configured to execute a data alignment instruction that handles two reads from a set of registers, such as a group of rotating registers.

### Detailed Description of Embodiments

As previously mentioned, conventional rotating register groups are not designed to receive data read in streaming mode, nor to support the realignment operations required at each iteration of a loop. Such an alignment involves, for example, concatenating the contents of two successive registers to extract a block of data that overlaps the two registers.

Incidentally, it should be noted that memory is often designed to allow data to be accessed with a granularity of one byte, which in principle allows correctly aligned data to be retrieved on the data bus. However, such fine-grained accesses cost at least two cycles in aligning the data on the bus. Thus, it is preferred to use memory accesses that cost a single cycle, using the coarsest access granularity. Despite the subsequent alignment operations involved, performance is better overall.

A particular structure is proposed hereafter allowing to operate on an arbitrary set of registers forming a group of rotating registers, or more generally a buffer area, manageable by dedicated low-level instructions of the processor instruction set. In particular, one of these instructions operates simultaneously (in one cycle) on two rotating registers that have been loaded at different iterations.

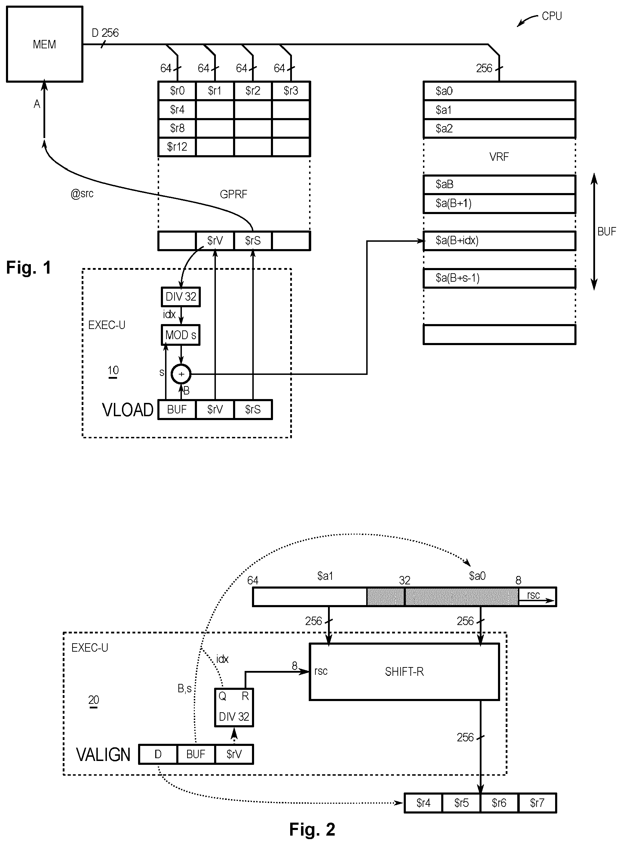

Figure 1 shows a block diagram of a number of elements of a central processing unit CPU of a processor core used to execute a special instruction to load a vector register from data in memory, called VLOAD. Only those elements that are useful for understanding the execution of the instruction are illustrated; many other conventional elements of a processor core are not described.

The CPU is connected to a shared memory MEM by a data bus D. The width N of the bus D is equal to 256 bits, as an example, i.e., 32 bytes. The memory MEM is controlled by an address bus A, which may have a size of 64 bits to access the memory with a granularity of one byte.

The CPU includes a set of general-purpose registers GPRF (General-Purpose Register File), which are used to store addresses, operands of usual instructions and results of usual instructions. Each register is denoted by $rX (where X is the register rank) and has a capacity of, say, 64 bits. The registers may be organized into banks of four, with each register in a bank connected to the data bus D by a respective group of 64 lines. The registers are also wired, which is not shown in detail, to be individually accessible by hardware execution units implementing the various instructions in the processor instruction set.

Such a register organization allows execution units to operate on 64-bit data by designating individual registers, or to perform 256-bit data block transfers by designating register quadruplets.

The CPU also includes a set of vector registers VRF (Vector Register File), typically used to store several data to be processed in SIMD mode (Single Instruction - Multiple Data). Each vector register is designated by $aX (where X is the rank of the register) and has a capacity of 256 bits, i.e., the width of the data bus to which it is connected. The vector registers $a may be a superset of the general purpose registers $r, each vector register then corresponding to a bank of four general purpose registers.

A plurality of consecutive vector registers $aB to $a(B+s-1) are interpreted by the VLOAD instruction as a buffer area BUF. The buffer area may start at an arbitrary vector register of rank B and have an arbitrary size s, usually an even number.

An execution unit 10 is designed to implement the execution of a vector register load instruction VLOAD. The VLOAD instruction conveys three parameters, namely:
a value BUF that encodes the starting rank (or base) B and the size s of the buffer zone BUF,
a reference to a general purpose register $rV that contains an index idx identifying a current vector register in the buffer BUF, and
a reference to a general purpose register $rS that contains a source memory address @src.

When the VLOAD instruction is executed, the execution unit retrieves the index idx contained in the referenced register $rV and the source memory address @src contained in the referenced register $rS. For reasons of consistency with the VALIGN instruction discussed later, the index as stored in the register $rV is a number of bytes. To obtain the index idx indicating a vector register position in the buffer, the content of the register $rV is divided by 32, as shown, which is equivalent to shifting the register content to the right by 5 positions.

The address @src is presented to the memory to read 256 corresponding bits through the bus D, which will be loaded in a vector register $a(B+idx) corresponding to the index idx. As illustrated, the selection of the vector register may be achieved by adding the index idx to the base B contained in the first parameter BUF of the VLOAD instruction. To make the buffer circular, the index idx is adjusted modulo s, the size of the buffer area also contained in the parameter BUF. The base B and the size s may be encoded in two respective fields of the parameter BUF. An instruction parameter, which may in some cases be used as an immediate value, typically has the same size as the general purpose registers, here 64 bits.

Figure 2 shows a block diagram of additional CPU elements used to execute a special alignment instruction, denoted VALIGN.

For the purposes of the VALIGN instruction, the odd and even vector registers are accessible to the CPU execution units via two separate 256-bit buses, allowing an even register (e.g., $a0) and an odd register (e.g., $a1) to be read or written simultaneously.

An execution unit 20 is designed to implement the execution of a VALIGN instruction. The VALIGN instruction conveys three parameters, namely:
a destination D that identifies a resource capable of receiving 256 bits, such as a quadruplet of general purpose registers, for example $r4 to $r7, or a vector register,
a value BUF that, as for the VLOAD instruction, encodes the base B and the size s of the buffer area BUF, and
a reference to a general purpose register $rV that encodes an index idx identifying a current vector register in the buffer BUF, e.g., $a0, and also a right shift count rsc.

When the VALIGN instruction is executed, the execution unit retrieves the content of the referenced register $rV. The index idx encoded in this register is used, as for the VLOAD instruction, in combination with the parameter BUF, to designate a vector register in the buffer area, for example $a0. In addition, the immediately following vector register $a1 is implicitly designated as well. The contents of the designated vector registers $a0 and $a1 are concatenated, with the register $a0 on the right side, i.e., as the least significant bits. In other words, the weights increase from right to left. The concatenated contents are simultaneously presented to a 512-bit input right-shift circuit SHIFT-R. This circuit performs a right shift of the 512 inputs by the count rsc taken from the referenced register $rV and presents at its output the 256 least significant bits of the shifted concatenated contents. Thus, a 256-bit block of useful data overlapping the registers $a0 and $a1, as shown in gray, is presented on the 256 output bits of the shifter circuit.

The output of the shifter is loaded into the registers designated by the destination parameter D, here the register bank $r4 to $r7. Alternatively, the output of the shifter could be loaded into another vector register, designated by the D parameter.

In practice, the right shift count rsc has the granularity of the memory addressing, here one byte. Since the width of the memory bus D is 32 bytes, the shift has a maximum value of 31×8 bits or 31 bytes, a value that can be encoded by 5 bits. Thus, the count rsc may be encoded in the 5 least significant bits of the register $rV, and the index idx in the remaining bits. As illustrated in Figure 2, the index idx and the count rsc may be formalized as the quotient Q and the remainder R of the division by 32 of the content of the register $rV.

The VLOAD and VALIGN instructions reveal their interest by using them jointly in a loop to process one or more data streams, each stream being associated with a data buffer. An example of a loop to process a single stream is shown below in Table 1. This loop is designed to copy a misaligned data block stored in memory at an address @src to an address @dst in the same memory. The fact that the block is misaligned is reflected by an address @src whose 5 least significant bits convey a non-zero value, e.g., 8.

The register $r0 is the register $rV referenced by the VALIGN instructions, encoding the buffer index and the shift count.

The register $r1 is the register $rS referenced by the VLOAD instructions, containing the memory read address.

The register $r2 is the register $rV referenced by the VLOAD instructions, containing the buffer index.

**[Table 1]**

| | |
|---|---|
| 1 | AND $r0 = @src, 31 |
| 2 | AND $r1 = @src, -32 |
| 3 | MAKE $r2 =0 |
| 4 | MAKE $r3 = @dst |
| | |
| 5 | VLOAD $a0..a3, $r2 = 0[$r1] |
| 6 | ADD $r2 = $r2, 32 |
| 7 | ADD $r1 = $r1, 32 |
| | |
| 8 | VLOAD $a0..a3, $r2 = 0[$r1] |
| 9 | ADD $r2 = $r2, 32 |
| 10 | ADD $r1 = $r1, 32 |
| 11 | VLOAD $a0..a3, $r2 = 0[$r1] |
| 12 | ADD $r2 = $r2, 32 |
| 13 | ADD $r1 = $r1, 32 |
| | |
| LOOP_BEGIN <i> | |
| | |
| 14 | VLOAD $a0..a3, $r2 = 0[$r1] |
| 15 | ADD $r2 = $r2, 32 |
| 16 | ADD $r1 = $r1, 32 |
| | |
| 17 | VALIGN $r8r9r10r11 = $a0..a3, $r0 |
| 18 | ADD $r0 = $r0, 32 |
| | |
| 19 | STORE 0[$r3] = $r8r9r10r11 |
| 20 | ADD $r3 = $r3, 32 |
| | |
| LOOP_END | |

At line 1, the register $r0 receives a bitwise AND between the address @src and the value 31. In other words, all the bits of the address @src are cancelled except the 5 least significant bits. Thus, the register $r0 receives the value 8 in this example.

At line 2, the register $r1 receives a bitwise AND between the @src address and the value -32, encoded in a two's complement format to represent negative numbers. This cancels the five least significant bits, and stores in the register $r1 an address aligned on the data bus.

At lines 3 and 4, the registers $r2 and $r3 are initialized to the values 0 and the address @dst, respectively.

At line 5, a first VLOAD instruction is executed using: (i) a buffer area formed by the registers $a0 to $a3, (ii) the index (equal to 0) contained in the register $r2, designating the register $a0, and (iii) a data block of 32 bytes (256 bits) starting at the address contained in the register $r1. This address is aligned to the 32-byte boundary preceding the position (+8) where the block of useful data starts.

At lines 6 and 7, the content of each of the registers $r2 and $r1 is incremented by the value 32 to designate, respectively, the next register $a1 of the buffer area and the next block of 32 bytes to be read from memory.

The operations of lines 5 to 7 are repeated twice from lines 8 to 13. As a result, the first three vector registers $a0 to $a2 in the buffer area are loaded with consecutive 32-byte blocks from memory.

The following operations, from lines 14 to 20, are executed in a loop of index i that can be iterated indefinitely.

At lines 14 to 16, the operations of lines 5 to 7 are repeated again. In the first iteration, this loads the next block of 32 bytes into the last register $a3 of the buffer area. The buffer area is full. Incrementing the content of register $r2 changes the index value to 4, pointing outside the buffer area. The index idx actually applied is calculated modulo the size (here 4) of the buffer area, as shown in figure 1, so that the value idx returns to 0.

At line 17, a VALIGN instruction is executed, using (i) the general purpose register bank $r8 through $r11 to receive the aligned data block, (ii) the buffer area $a0 through $a3, and (iii) the index and count contained in the register $r0.

In the first iteration, the register $r0 contains the value 8, according to the initialization on line 1. The index idx is 0 and the right shift rsc is 8. The concatenated contents of registers $a0 and $a1 are shifted right by 8 bytes, and the shifted result is written to registers $r8 to $r11.

It is assumed that the VALIGN instruction is executed at a time when the memory data has had time to arrive in the registers $a0 and $a1 given the memory latency. The VLOAD instruction of line 8 is the one that loads data into the second register $a1, and it was executed 10 cycles earlier. Thus, this loop allows a memory latency of up to 10 cycles. If a larger latency is to be compensated, a larger buffer size will be used, which increases the number of cycles of the loop "preamble" for pre-filling the buffer.

At line 18, the content of register $r0 is incremented by 32. At the first iteration, the register $r0 is updated to the value 40, encoding an index idx equal to 1 and a right shift rsc still equal to 8 (this shift usually remains constant in the loop).

At line 19 the contents of registers $r8 to $r11 are written to the address contained in register $r3, i.e., @dst.

At line 20 the content of the register $r3 is incremented by 32, to update the destination address of the data block that will be written to memory at the next iteration.

In the second iteration of the loop, the VLOAD instruction loads the corresponding memory contents into the vector register, $a0, of index 4 modulo 4, overwriting the value that was used by the VALIGN instruction in the previous iteration. The VALIGN instruction in the second iteration uses the next vector registers $a1 and $a2. And so on.

It should be noted that the VLOAD and VALIGN instructions define and manage a set of vector registers as a group of rotating registers by, in particular, using an explicit index idx and handling this index in software. The hardware is adapted to simplify some of the details of rotating register management (such as the modulo s operation to produce the effective index idx) and to implement an alignment of the contents of two consecutive vector registers (512 bits) in one cycle (the separate access lines for even and odd registers). These instructions also allow the buffer area to be defined arbitrarily (position and size) in the set of vector registers.

The VLOAD instruction described so far reads a 256-bit block to transfer it completely into a 256-bit register. A typical memory structure usually also allows reading smaller blocks, such as 128, 64, 32, 16 or 8 bits. Extensions of this VLOAD instruction may thus be envisaged that read smaller blocks from memory to transfer them at a specified position of the destination register, for example read 64 bits that can be written at position 0, 64, 128 or 192 of the 256-bit destination register. The destination position may be encoded in the five least significant bits of the register $rV referenced by the VLOAD instruction. Such a VLOAD instruction, executed several times with a different destination position, allows data blocks that are disjoint in memory to be gathered together in the same vector register.

In an embodiment where the flexibility offered by an explicit index is not essential, an alignment functionality may nevertheless be realized based on a conventional rotating buffer structure, e.g., as described in the document "HPL-93-80 HPL-PD Architecture Specification", called RRB (Rotating Register Buffer). A feature of such a rotating register buffer is that the address range used to access the registers is a slot on a circle of registers that rotates by one register at each execution of the branch that iterates the loop, which implies that all the available rotating buffers evolve in the same way. In addition to the overhead implemented in the branch instruction, which contradicts modern CPU architecture trends, this solution requires the use of complex and specific register allocation techniques as described in the document "HPL-92-48 Register Allocation for Modulo Scheduled Loops: Strategies, Algorithms and Heuristics".

With such rotating registers, the loop preamble executes three VLOAD instructions with the same address in the rotating buffer, say 4, and three corresponding updates of the read address in memory. Inside the loop, a new VLOAD instruction is executed, also with address 4. After executing this instruction, the rotating buffer is rotated to present a new register behind address 4 and the four blocks read from memory are available at addresses 0 to 3 of the rotating buffer.

The VALIGN instruction executed afterwards in the loop requires, to perform the shift, the two blocks written 4 and 3 cycles earlier, which are available at addresses 4 - 4 = 0 and 4 - 3 = 1. The corresponding execution unit may be configured to simultaneously access the registers behind addresses 0 and 1 without causing a rotation of the registers. To this end, the registers may be wired, as before, so that the odd and even registers are accessible individually and simultaneously.

This embodiment allows to write a more compact code, because the instructions for updating the explicit index are omitted.

## Claims

1. A method of aligning data read from a memory, comprising the following steps implemented at low level in a processor core:
providing a rotating buffer area (BLTF) of a plurality of registers of the processor core;
executing a series of load instructions (VLOAD) to transfer blocks of data from the memory to first successive registers of the buffer, the number of instructions in the series being selected based on a memory read latency; and
executing a loop including:
i) a load instruction configured to transfer a memory block to a successive register of the buffer area,
ii) an alignment instruction configured to simultaneously access two previously loaded successive registers of the buffer area and extract a data block overlapping the two successive registers, and
iii) instructions processing the extracted data block.

2. The method according to claim 1, wherein the load instruction (VLOAD) and the alignment instruction (VALIGN) are each executed with a first parameter (BUF) defining the start and size of the buffer, and a second parameter ($rV) referencing an index (idx) that identifies a position in the buffer, the method comprising steps of updating the indexes to designate successive registers in the buffer.

3. A processor core including:
an N-bit system memory interface;
a register file comprising a plurality of general purpose registers ($r) of capacity less than N bits;
a set of N-bit vector registers ($a);
in its instruction set, a register manipulation instruction (VLOAD, VALIGN) executable with the following parameters:
a) a value (BUF) defining in the set of vector registers a buffer area formed by a plurality of consecutive vector registers, and
b) a reference to a first general purpose register ($rV), the first general purpose register containing an index (idx) identifying a vector register ($a(B+idx)) within the buffer area; and
an execution unit (10, 20) configured to, upon execution of a register manipulation instruction, read or write, in one cycle, N bits in a vector register identified from the value defining the buffer area and the index contained in the first general purpose register ($rV).

4. The processor core of claim 3, wherein the register manipulation instruction is an alignment instruction (VALIGN) executable with the following parameters:
a) the value (BUF) defining the buffer area,
b) the reference to the first general purpose register ($rV), the first general purpose register ($rV) containing a value combining the index (idx) identifying the vector register within the buffer area and a right shift count (rsc), and
d) a destination (D) defining a vector register or a plurality of consecutive general purpose registers ($r4r5r6r7) having together a capacity of N bits; and
the execution unit (20) is configured to, upon execution of an alignment instruction, simultaneously read two consecutive vector registers ($a0, $a1) at the index, shift the concatenated contents of the two vector registers to the right by the right shift count (rsc), and write the N least significant bits of the shifted contents at the destination.

5. The processor core of claim 3, wherein the register manipulation instruction is a vector load instruction (VLOAD) executable with the following parameters:
a) the value (BUF) defining the buffer area,
b) the reference to the first general purpose register ($rV) containing the index, and
c) a reference to a second general purpose register ($rS) containing a source memory address (@src); and
the execution unit (10) is configured to, upon execution of a vector load instruction, transfer data from the memory at the address (@src) contained in the second general purpose register ($rS) to the vector register identified by the index.

6. The processor core of claim 3, wherein the value (BUF) defining the buffer area encodes the rank of the initial vector register (B) of the buffer area and the size (s) of the buffer area, and the execution unit is configured to produce the index modulo the size of the buffer area, whereby the buffer area is used in a rotating manner.
